Europäisches Patentamt

European Patent Office

Office européen des brevets

(19)

(11) Numéro de publication: **0 213 977**
**B1**

(12)

# FASCICULE DE BREVET EUROPEEN

(45) Date de publication du fascicule du brevet:
**26.10.88**

(51) Int. Cl.⁴: **B 62 D 25/20**

(21) Numéro de dépôt: **86401439.4**

(22) Date de dépôt: **27.06.86**

(54) **Dispositif d'étanchéité pour mécanisme de direction d'un véhicule.**

(30) Priorité: **23.07.85 FR 8511245**

(43) Date de publication de la demande:
**11.03.87 Bulletin 87/11**

(45) Mention de la délivrance du brevet:
**26.10.88 Bulletin 88/43**

(84) Etats contractants désignés:
**DE GB IT**

(56) Documents cités:
**FR - A - 1 080 470**
**GB - A - 375 041**
**GB - A - 375 591**
**GB - A - 2 035 477**
**US - A - 2 123 004**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Vadaine, Bernard, 1 rue E-Varlin, F-95190 Goussainville (FR)**

(74) Mandataire: **Durand, Yves Armand Louis et al, Cabinet Z. Weinstein 20, Avenue de Friedland, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un dispositif d'étanchéité qui est par exemple destiné à être interposé entre le mécanisme de direction d'un véhicule automobile et la cloison séparant le compartiment moteur de l'habitacle de ce véhicule.

On a déjà proposé, si l'on se reporte par exemple à la page 133 du document «Fahrwerktechnik: Lenkung; Vogel-Fachbuch Technik», une bague et un manchon tel que décrit dans le préambule de la revendication 1, pour assurer l'étanchéité entre un mécanisme de direction et une cloison.

Toutefois un tel dispositif d'étanchéité ne peut pas réaliser une étanchéité parfaite aux bruits et aux poussières sourtout lorsque les deux parois entre lesquelles est interposé le manchon ne sont pas parallèles.

Aussi, la présente invention a notamment pour but de résourdre ce problème.

A cet effet, l'invention a pour objet un dispositif d'étanchéité, destiné par exemple à être interposé entre le mécanisme de direction d'un véhicule automobile et la cloison séparant le compartiment moteur de l'habitacle de ce véhicule, et du type comprenant un manchon en matière souple, se prolongeant par une partie repliée vers l'intérieur du manchon pour former un soufflet assurant avec le manchon l'étanchéité entre le mécanisme de direction et ladite cloison, caractérisé en ce que la partie repliée en forme de soufflet comporte au moins une portion faisant saillie sensiblement radialement vers l'extérieur de façon à pouvoir être comprimée entre deux parois parallèles ou non appartenant respectivement à la cloison et au mécanisme de direction.

L'un des avantages du soufflet précité est donc de permettre une étanchéité parfaite entre la cloison et le mécanisme de direction, même si ce dernier, après montage, ne se situe pas dans un plan parallèle à la cloison. En effet, le soufflet s'interposera efficacement dans l'espace existant entre cloison et mécanisme de direction, quelle que soit la forme de cet espace.

Suivant une autre caractéristique de l'invention, l'extrémité libre de la partie repliée formant soufflet s'étend sur une faible longueur à l'intérieur du manchon en étant, à l'état libre, légèrement espacée de la périphérie interne dudit manchon.

Selon encore une autre caractéristique de l'invention, des encoches sont prévues sur la périphérie interne du manchon au niveau du raccordement de celui-ci avec la partie repliée formant soufflet.

Ainsi, après montage du dispositif d'étanchéité sur la cloison, puis du mécanisme de direction sur ce dispositif, l'extrémité libre du soufflet prendra appui à l'intérieur du manchon et, ce faisant, tout risque de dépression à l'intérieur du soufflet sera évité grâce aux encoches assurant toujours une communication de l'intérieur du soufflet avec l'atmosphère extérieure.

On précisera encore ici que le manchon est pourvu sur sa surface extérieure d'une gorge dans laquelle s'engage la cloison précitée.

Cette gorge est définie d'un côté par la partie repliée formant soufflet et de l'autre côté par une surépaisseur située à l'extrémité libre du manchon qui comporte également une lèvre annulaire infléchie vers l'axe dudit manchon et formant une barrière efficace aux poussières.

Mais d'autre avantages et caractéristiques de l'invention apparaîtront mieux dans la description détaillée qui suit et se réfère aux dessins annexés, donnés uniquement à titre d'exemple, et dans lesquels:

la figure 1 est une vue en coupe axiale d'un dispositif d'étanchéité conforme à l'invention et représenté à l'état libre; et

la figure 2 est également une vue du dispositif d'étanchéité de la figure 1, mais qui est ici représenté en position montée sur une cloison pour assurer l'étanchéité entre l'habitacle d'un véhicule et le mécanisme de direction de ce véhicule.

En se reportant aux dessins, on voit qu'un dispositif d'étanchéité conforme à l'invention est réalisé en une matière souple, telle que par exemple caoutchouc, et comprend essentiellement un manchon 1 qui se prolonge par une partie 2 repliée vers l'intérieur du manchon 1 pour former un soufflet définissant en quelque sorte une chambre annulaire 3.

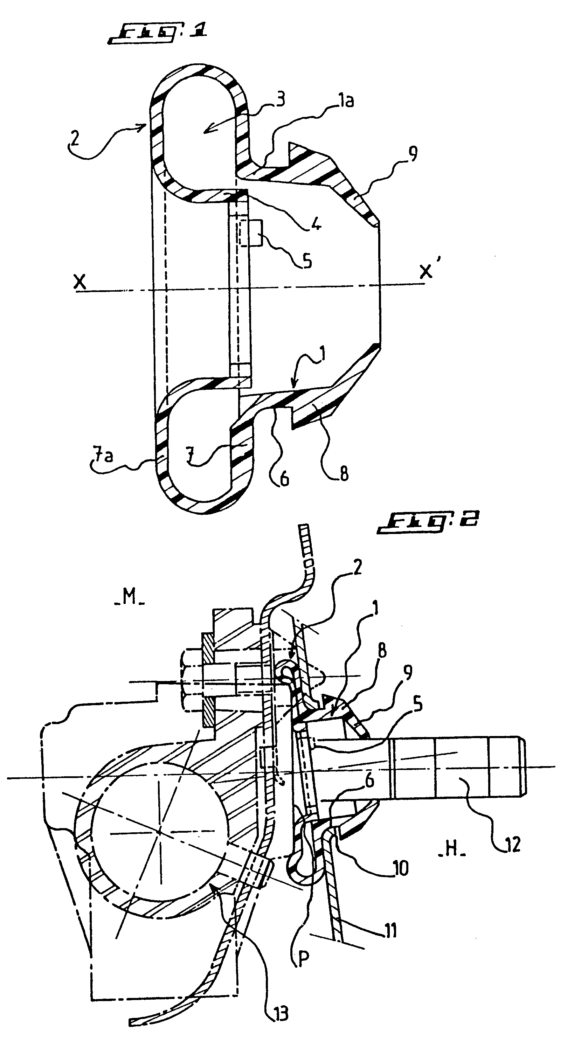

Comme on le voit bien sur la figure 1, l'extrémité libre et annulaire 4 de la partie repliée 2 formant soufflet s'étend très légèrement à l'intérieur du manchon 1 tout en étant quelque peu espacée de la périphérie interne de celui-ci. Suivant l'exemple représenté, l'extrémité libre 4 de la partie repliée ou soufflet 2 s'étend à l'intérieur du manchon 1 suivant une distance correspondant sensiblement à la racine 1a du manchon 1.

A cet endroit, le manchon 1 comporte, sur sa surface intérieure, des encoches 5 qui sont de préférence au nombre de trois, et sont régulièrement réparties à l'intérieur dudit manchon. Les encoches 5, qui sont ménagées au niveau de la zone de raccordement du manchon 1 à la portion 7 de la partie repliée 2 permettent une communication de la chambre annulaire 3 avec l'atmosphère extérieure, c'est-à-dire finalement une mise à l'atmosphère constante de l'intérieur du soufflet 2 de manière à éviter tout risque de dépression lors du montage du manchon 1, comme on l'expliquera plus loin.

Comme il apparaît clairement sur la figure 1, la partie repliée ou soufflet 2 est d'un diamètre extérieur nettement supérieur au diamètre du manchon 1, de manière à remplir correctement sa fonction d'étanchéité, comme on l'expliquera plus loin.

Le manchon 1 est extérieurement pourvu d'une gorge 6 qui permet son montage. Cette gorge 6 est définie d'un côté par la partie repliée 2, c'est-à-dire plus précisément par la portion 7 de cette partie repliée, qui se raccorde au manchon 1, et de l'autre côté par une surépaisseur annulaire 8 formée autour de l'extrémité libre du manchon 1.

Cette extrémité libre du manchon 1 est constituée par une lèvre annulaire 9 infléchie vers l'axe X-X' du manchon et constituant avantageusement une barrière aux poussières.

On expliquera brièvement ci-après le montage du dispositif d'étanchéité qui vient d'être décrit, et cela en se reportant à la figure 2.

Tout d'abord, le manchon 1 est clippé dans l'ouverture 10 d'une cloison 11 séparant le compartiment moteur M de l'habitacle H d'un véhicule. Plus précisément, grâce à la surépaisseur conique 8, les bords de l'ouverture 10 de la cloison 11 se trouvent engagés dans la gorge 6.

Le mécanisme de direction comprenant l'arbre ou la colonne de direction 12, ainsi que le carter de direction 13 sont ensuite montés. Plus précisément, l'arbre de direction 12 est introduit à l'intérieur du manchon 1 la lèvre 9 venant s'appliquer sur cet arbre, tandis que les portions 7 et 7a de la partie repliée ou soufflet 2 sont en appui respectivement sur la cloison 11 et sur le carter de direction 3. Lors du montage du mécanisme de direction, au moins une portion de la partie repliée ou soufflet 2 est comprimée, et toute dépression à l'intérieur du soufflet est avantageusement évitée grâce aux encoches 5. On notera par ailleurs que le soufflet 2 permet avantageusement d'accepter que la cloison de séparation 11 et le plan P du carter de direction 3 ne soient pas parallèles, et cela sans nuire aucunement à l'étanchéité entre ladite cloison et le mécanisme de direction.

On a donc réalisé suivant l'invention un dispositif d'étanchéité qui, grâce à la lèvre 9, assure une excellente protection contre les poussières, et qui, grâce au soufflet 2, fermé après montage, assure une excellente protection contre les bruits et leur propagation.

Bien entendu, l'invention n'est pas limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif d'étanchéité, destiné par exemple à être interposé entre le mécanisme de direction (12, 13) d'un véhicule automobile et la cloison (11) séparant le compartiment moteur (M) de l'habitacle (H) de ce véhicule, et du type comprenant un manchon (1) en matière souple, se prolongeant par une partie (2) repliée vers l'intérieur du manchon pour former un soufflet assurant avec le manchon (1) l'étanchéité entre le mécanisme de direction et ladite cloison, caractérisé en ce que la partie repliée (2) en forme de soufflet comporte au moins une portion (7, 7a) faisant saillie sensiblement radialement vers l'extérieur de façon à pouvoir être comprimée entre deux parois parallèles ou non appartenant respectivement à la cloison (11) et au mécanisme de direction.

2. Dispositif selon la revendication 1, caractérisé en ce que l'extrémité libre (4) de la partie repliée (2) formant soufflet s'étend sur une faible longueur à l'intérieur du manchon (1) en étant, à l'état libre, légèrement espacée de la périphérie interne dudit manchon.

3. Dispositif selon la revendication 1 ou 2, caractérisé en ce que des encoches (5) sont prévues sur la périphérie interne du manchon (1) au niveau du raccordement de celui-ci avec la partie repliée (2) formant soufflet.

4. Dispositif selon l'une des revendications 1 à 3, caractérisé en ce que le manchon (1) est pourvu sur sa surface extérieure d'une gorge (6) dans laquelle s'engage la cloison précitée (11).

5. Dispositif selon l'une des revendications 1 à 4, caractérisé en ce que la gorge précitée (6) est définie d'un côté par la partie repliée (2) formant soufflet et de l'autre côté par une surépaisseur (8) à l'extrémité libre du manchon (1) qui comporte également une lèvre annulaire (9) infléchie vers l'axe (X-X') dudit manchon.

## Patentansprüche

1. Dichtungsvorrichtung z.B. zur Zwischenstellung zwischen der Lenkvorrichtung (12, 13) eines Kraftfahrzeugs und der den Motorraum (M) und das Karosseriegehäuse (H) dieses Fahrzeugs trennenden Trennwand (11), und der Gattung, die eine Hülse (1) aus nachgiebigem Material aufweist, die von einem zum Inneren der Hülse gekrümmten Teil (2) verlängert ist, zur Bildung eines mit der Hülse (1) die Dichtung zwischen der Lenkvorrichtung und der besagten Trennwand gewährleistenden Balgs, dadurch gekennzeichnet, dass der als Balg gekrümmte Teil (2) wenigstens einen Teil (7, 7a) aufweist, der im wesentlichen radial zum Äusseren vorspringt, damit er zwischen zwei parallelen oder nicht parallelen zur Trennwand (11) bzw. zur Lenkvorrichtung gehörenden Wänden gepresst werden kann.

2. Vorrichtung nach Anspruch 1, dadurch gekennzeichnet, dass das freie Ende (4) des gekrümmten, Balg bildenden Teils (2) sich entlang einer kurzen Länge in der Hülse (1) dehnt und im freien Zustand vom inneren Umfang der besagten Hülse leicht entfernt ist.

3. Vorrichtung nach Anspruch 1 oder 2, dadurch gekennzeichnet, dass Kerben (5) auf dem inneren Umfang der Hülse (1) am Anschluss der Hülse mit dem gekrümmten, Balg bildenden Teil (2) vorgesehen sind.

4. Vorrichtung nach einem der Ansprüche 1 bis 3, dadurch gekennzeichnet, dass die Hülse (1) auf ihrer äusseren Oberfläche eine Rille (6) aufweist, in die die besagte Trennwand (11) sich einfügt.

5. Vorrichtung nach einem der Ansprüche 1 bis 4, dadurch gekennzeichnet, dass die besagte Rille (6) auf einer Seite durch den gekrümmten, Balg bildenden Teil (2) und auf der anderen Seite durch einen Wulst (8) am freien Ende der Hülse (1) gebildet ist, wobei dieses Ende zusätzlich eine ringförmige, zur Achse (X-X') der gesagten Hülse gebogene Lippe aufweist.

## Claims

1. Sealing device, intended for example to be interposed between the steering mechanism (12, 13) of an automotive vehicle and the partition wall (11) separating the engine compartment (M) and the body (H) of this vehicle, and of the type comprising a sleeve (1) of a flexible material, prolongated by a part (2) folded towards the interior of the sleeve to form a bellows providing with the sleeve (1) the tightness between the steering mechanism and the said partition wall, characterized in that the part (2) folded in the shape of a bellows comprises at least one portion (7, 7a) protruding substantially radially towards the outside so as to be in a condition to be compressed between two parallel or non parallel walls belonging respectively to the partition wall (11) and to the steering mechanism.

2. Device according to claim 1, characterized in that the free end (4) of the folded bellows-forming part (2) extends along a small length inside the sleeve (1) while being, in the free state, slightly spaced from the inner periphery of the said sleeve.

3. Device according to claim 1 or 2, characterized in that notches (5) are provided on the inner periphery of the sleeve (1) at the junction thereof with the folded bellows-forming part (2).

4. Device according to one of claims 1 to 3, characterized in that the sleeve (1) is provided on its outer surface with a groove (6) in which the aforesaid partition wall (11) is engaged.

5. Device according to one of claims 1 to 4, characterized in that the aforesaid groove (6) is defined on one side by the folded bellows-forming part (2) and on the other side by an extra thickness (8) located at the free end of the sleeve (1) which comprises also an annular lip (9) bent towards the axis (X-X') of the said sleeve.

Fig.1

Fig.2